# EUROPÄISCHE PATENTSCHRIFT

(11) **EP 3 788 269 B1**
(45) Veröffentlichungstag und Bekanntmachung des Hinweises auf die Patenterteilung: **07.06.2023**
(21) Anmeldenummer: 19722785.3
(22) Anmeldetag: 16.04.2019
(51) Int. Cl.: F16D 3/72

(54) **VERFAHREN ZUM HERSTELLEN EINER KUPPLUNG UND KUPPLUNG, INSBESONDERE FÜR EINEN GETRIEBEMOTOR**
METHOD FOR PRODUCING A CLUTCH, AND CLUTCH, IN PARTICULAR FOR A GEARED MOTOR
PROCÉDÉ DE FABRICATION D'UN ACCOUPLEMENT ET ACCOUPLEMENT, EN PARTICULIER POUR UN MOTORÉDUCTEUR

(30) Priorität: 03.05.2018 DE 102018003576
(43) Veröffentlichungstag der Anmeldung: 10.03.2021
(73) Patentinhaber: SEW-EURODRIVE GmbH & Co. KG, 76646 Bruchsal (DE)
(72) Erfinder: WAHL, Reiner, 76229 Karlsruhe (DE); SCHMIDT, Rolf, 76703 Kraichtal (DE)
(86) Internationale Anmeldenummer: PCT/EP2019/025108
(87) Internationale Veröffentlichungsnummer: WO 2019/211003

(56) Entgegenhaltungen:
- EP-A2- 0 534 926
- DE-A1-102006 021 664
- DE-B3- 10 346 053

## Beschreibung

Die Erfindung betrifft **ein Verfahren zum Herstellen einer Kupplung und eine Kupplung, insbesondere für einen Getriebemotor.**

Es ist allgemein bekannt, dass eine Kupplung zwei Wellen miteinander zur Drehmomentdurchleitung verbindet.

**Aus der** EP 0 534 926 A2 **ist als nächstliegender Stand der Technik ein Kupplungsglied bekannt.**

**Aus der** DE 10 2006 021 664 A1 **ist eine Kupplung bekannt, welche** zwei Wellen miteinander zur Drehmomentdurchleitung verbindet.

**Aus der** DE 10 2011 118 989 A1 **ist eine Metallbalgkupplung bekannt, welche mit einem aus Stahl gefertigten Balg verschweißte Anbaunaben aus Aluminium aufweist**

**Aus der** DD 1 14 130 A1 **ist eine Metallbalgkupplung bekannt.**

**Aus der** DE 103 46 053 B3 **ist eine Gelenkwelle bekannt.**

**Aus der** DE 101 18 562 A1 **ist eine Kupplung zum Verbinden zweier Bauteile bekannt.**

**Aus dem Lehrbuch G. Niemann, Konstruieren im Maschinenbau, Erfahrungsangaben, Institut für Allg. Gestaltungslehre und Maschinenelemente, Technische Hochschule München, Umdruck 0, 1957 sind Empfehlungen für geschweißte Konstruktionen bekannt.**

Der Erfindung liegt daher die Aufgabe zugrunde, die Kupplungsteile der Kupplung zueinander koaxial ausgerichtet und hoch belastbar herzustellen.

Erfindungsgemäß wird die Aufgabe bei der Kupplung nach den in Anspruch 1 und bei dem Verfahren nach den in Anspruch 5 angegebenen Merkmalen gelöst.

Von Vorteil ist dabei, dass die Verbindung zwischen dem Balg und dem ersten Kupplungsteil belastbar ist und die Verbindung zum zweiten Kupplungsteil hin die koaxiale Ausrichtung der beiden Kupplungsteile zueinander sicherstellt.

Bei der Herstellung ist daher zunächst ein Aufstecken des Balgs auf das erste Kupplungsteil vorteilhaft. Somit ist mittels Schweißen eine belastbare Verbindung zwischen erstem Kupplungsteil und Balg hergestellt. Danach wird das zweite Kupplungsteil zum ersten Kupplungsteil koaxial ausgerichtet, wofür radiales Verschieben ausführbar ist. Außerdem wird vorzugsweise das zweite Kupplungsteil zum ersten Kupplungsteil hingedrückt, also der Balg gestaucht. Die dabei bewirkte Kraft belasten zwar die Verbindung zwischen dem ersten Kupplungsteil und dem Balg, jedoch werden sie vom Balg an einer Berührfläche in das erste Kupplungsteil eingeleitet, welche beabstandet und insbesondere senkrecht ausgerichtet ist zur die Schweißverbindung aufweisenden Kontaktfläche. Nach dem koaxialen Ausrichten der beiden Kupplungsteile zueinander wird dann die Schweißverbindung hergestellt, also das Verschweißen ausgeführt.

Auf diese Weise ist eine koaxial ausgerichtete, belastbare Kupplung bereitgestellt.

Wichtige Merkmale bei der Kupplung, insbesondere für einen Getreibemotor sind, dass die Kupplung
- ein erstes Kupplungsteil zur Verbindung mit einer ersten Welle, insbesondere Getriebewelle,
- ein zweites Kupplungsteil zur Verbindung mit einer zweiten Welle, insbesondere Motorwelle,
- und einen Balg
aufweist,
wobei der Balg mit dem ersten Kupplungsteil nur an einer ersten Kontaktfläche stoffschlüssig verbunden ist,
wobei der Balg mit dem zweiten Kupplungsteil nur an einer zweiten Kontaktfläche stoffschlüssig verbunden ist,
dadurch gekennzeichnet, dass
die erste Kontaktfläche einen einzigen Radialabstand aufweist, insbesondere sich also nur in axialer und in Umfangsrichtung erstreckt,
und dass die zweite Kontaktfläche eine einzige axiale Position aufweist, insbesondere sich also nur in radialer Richtung und in Umfangsrichtung erstreckt.

Von Vorteil ist dabei, dass die beiden Kontaktflächen senkrecht zueinander ausgerichtet sind. Die Ausrichtung und/oder Form der Kontaktflächen bewirkt, dass vor Herstellen der Schweißverbindung ein relativ zueinander ausgeführtes Verschieben der beiden in Kontakt gebrachten Teile ermöglicht ist. Wenn also die Kontaktfläche eben ist, ist ein Verschieben in den Richtungen der Ebene ausführbar. So hat die zweite Kontaktfläche nur eine einzige axiale Position. Somit ist die Kontaktfläche eine ebene Fläche und ein Verschieben in radialer Richtung oder ein Drehen in Umfangsrichtung verändert diese axiale Position nicht.

Ebenso weist die erste Kontaktfläche nur einen Radialabstand auf, ist also eine Zylinderfläche. Ein Verschieben in axialer Richtung oder ein Drehen in Umfangsrichtung verändert den Radialabstand nicht.

Erfindungsgemäß berührt der Balg das erste Kupplungsteil zusätzlich zur ersten Kontaktfläche an einer Berührfläche, welche eine axiale Position aufweist, insbesondere sich also nur in radialer Richtung und in Umfangsrichtung erstreckt. Von Vorteil ist dabei, dass Axialkräfte, insbesondere vom axial gerichteten Stauchen des Balgs her bewirkte Axialkräfte, senkrecht in die Berührfläche einleitbar sind und somit nicht über die erste Kontaktfläche, also die Schweißverbindung, geleitet werden. Somit ist die Schweißverbindung geschützt und die gesamte Verbindung zwischen Balg und erstem Kupplungsteil mit hoher Axialkraft beaufschlagbar.

Erfindungsgemäß bildet das erste Kupplungsteil, insbesondere der Kragen oder Absatz, einen axialen Anschlag und/oder eine axiale Begrenzung für den Balg. Von Vorteil ist dabei, dass Axialkraft vom Balg in das erste Kupplungsteil einleitbar ist und somit die Schweißverbindung schützbar ist.

Wichtige Merkmale bei dem Verfahren zum Herstellen einer Kupplung sind, dass die Kupplung
- ein erstes Kupplungsteil,
- ein zweites Kupplungsteil
- und einen Balg
aufweist,
wobei in einem ersten Herstellverfahrensschritt der Balg axial, insbesondere in axialer Richtung, auf das erste Kupplungsteil, insbesondere auf einen Absatz oder Kragen des ersten Kupplungsteils, in radialer Richtung spielfrei aufgesteckt und danach schweißverbunden wird,
danach in einem zweiten Herstellverfahrensschritt das zweite Kupplungsteil axial, insbesondere in axialer Richtung, an den Balg mit radialem Spiel angelegt, koaxial zum ersten Kupplungsteil ausgerichtet und danach schweißverbunden wird. Von Vorteil ist dabei, dass Axialkraft in die spielfreie Verbindung einleitbar ist und dabei direkt ins erste Kupplungsteil und nicht über die Schweißverbindung des ersten Kupplungsteils mit dem Balg einleitbar ist. Nachteilig ist bei der Verbindung mit dem ersten Kupplungsteil, dass der Balg nicht eindeutig ausgerichtet ist, jedoch ist ein Ausrichten des zweiten Kupplungsteils mittels des radialen Spiels ermöglicht und somit auch ein koaxiales Ausrichten der beiden Kupplungsteile zueinander.

Erfindungsgemäß wird während eines zwischen dem ersten und zweiten Herstellverfahrensschritt ausgeführten zwischengeordneten Herstellverfahrensschritts der Balg axial gestaucht. Von Vorteil ist dabei, dass die beim Stauchen erzeugte Axialkraft in das erste Kupplungsteil eingeleitet wird.

Bei einer vorteilhaften Ausgestaltung wird die Schweißverbindung an einer ersten Kontaktfläche zwischen Balg und erstem Kupplungsteil ausgeführt,
wobei die erste Kontaktfläche sich nur axial und in Umfangsrichtung erstreckt, insbesondere nicht aber in radialer Richtung. Von Vorteil ist dabei, dass somit ein axiales Aufstecken des Balgs bis zum Anschlagen am ersten Kupplungsteil ermöglicht ist. Außerdem ist vor Herstellen der Schweißverbindung auch ein Drehen in Umfangsrichtung ermöglicht. Die beim Stauchen erzeugte Axialkraft wird aber nicht in die erste Kontaktfläche eingeleitet, sondern schon zuvor in eine anders ausgerichtete Berührfläche.

Bei einer vorteilhaften Ausgestaltung wird die Schweißverbindung an einer zweiten Kontaktfläche zwischen Balg und zweitem Kupplungsteil ausgeführt,
wobei die zweite Kontaktfläche sich nur in radialer Richtung und in Umfangsrichtung erstreckt, insbesondere nicht aber in axialer Richtung. Von Vorteil ist dabei, dass vor Herstellen der Schweißverbindung ein radiales Verschieben ermöglicht ist. Auf diese Weise ist ein koaxiales Ausrichten der beiden Kupplungsteile vor Herstellen der Schweißverbindung ermöglicht und durch Schweißverbinden fixierbar.

Weitere Vorteile ergeben sich aus den Unteransprüchen.

Die Erfindung wird nun anhand von schematischen Abbildungen näher erläutert:

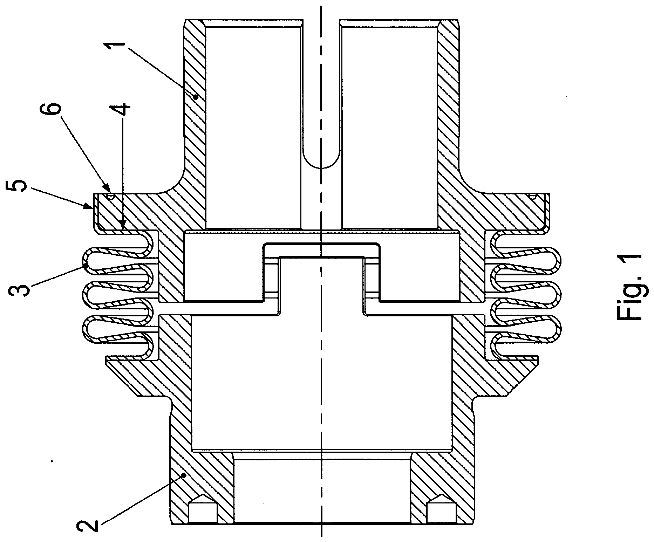

In der Figur 1 ist eine Schnittansicht einer erfindungsgemäßen Kupplung für einen Getriebemotor gezeigt.

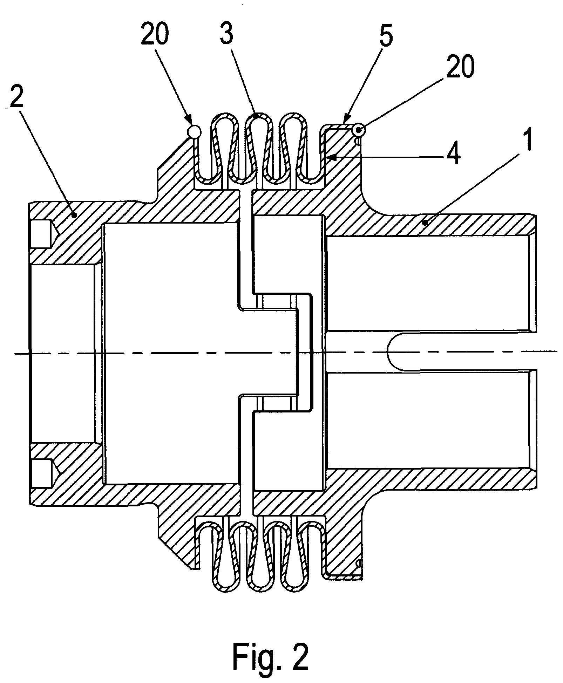

In der Figur 2 sind zusätzlich die Positionen für Schweißnähte schematisiert eingezeichnet.

Dabei weist die Kupplung ein erstes Kupplungsteil 1 und ein zweites Kupplungsteil 2 auf, welche über einen Balg 3 verbunden sind. Der Balg 3 weist mehrere, axial nebeneinander angeordnete Falten auf. Somit ist der Balg 3 als Faltenbalg bezeichenbar.

Das erste Kupplungsteil 1 ist mit einer eintreibenden Welle eines Getriebes verbunden.

Das zweite Kupplungsteil 2 ist mit einer Rotorwelle eines Elektromotors verbunden.

Der Balg 3 ist vorzugsweise ein Metallbalg, insbesondere aus Stahl. Die Kupplungsteile (1, 2) sind vorzugsweise aus Metall, insbesondere Stahl, gefertigt.

Der Balg 3 ist vorzugsweise mit jedem der beiden Kupplungsteile (1, 2) schweißverbunden.

Wie in den Figuren dargestellt, liegt der Balg 3 mit seinem vom ersten Kupplungsteil abgewandten Endbereich, insbesondere Bord, flächig an einem radial hervorstehenden Kragen des zweiten Kupplungsteils 2 an. Dabei erstreckt sich die Kontaktfläche nur in Umfangsrichtung und in radialer Richtung, hat also keine wesentliche axiale Ausdehnung.

Insbesondere ist also die Kontaktfläche an einer einzigen axialen Position angeordnet.

Da die Kontaktfläche nur einen Teilbereich einer Stirnfläche des zweiten Kupplungsteils 2 bedeckt ist bei Montage das zweite Kupplungsteil 2 vor dem Schweißverbinden mit dem Balg 3 noch radial verschiebbar. Es besteht also noch ein radiales Spiel. Hierzu weist die am zweiten Kupplungsteil 2 ausgeformte Aufnahme für den Balg 3 udn7oder die Stirnfläche einen kleineren Durchmesser auf als der kleinste lichte Durchmesser des Balgs 3, insbesondere in dem vom Balg 3 und vom zweiten Kupplungsteil 2 gemeinschaftlich überdeckten axialen Bereichs.

Die Rotorwelle wird in einem hohlen Bereich des zweiten Kupplungsteils 2 aufgenommen und kraftschlüssig und/oder formschlüssig verbunden mit dem zweiten Kupplungsteil 2.

Auch am ersten Kupplungsteil 1 ist ein radial hervorstehender Kragen ausgeformt, welcher den zum ersten Kupplungsteil 1 hin gewandten Endbereich des Balgs 3 aufnimmt.

Dabei ist allerdings der Endbereich, insbesondere also Bord, des Balgs 3 um senkrecht umgebogen, so dass der Balg 3 auf den Kragen aufgestülpt und/oder aufgesteckt ist.

Die für die Schweißverbindung vorgesehene Kontaktfläche 5 befindet sich auf nur einer einzigen radialen Position, erstreckt sich also in axialer Richtung und in Umfangsrichtung.

Die radiale Position ist dabei der Radialabstand zur Drehachse, welche bei koaxialer Ausrichtung der Kupplungsteile (1, 2) der Drehachse der der Rotorwelle und der Drehachse der eintreibenden Welle des Getriebes gleicht.

Nach dem Aufstecken des Balgs 23 auf den Kragen des ersten Kupplungsteils 1 berührt der Balg 3 das erste Kupplungsteil 1 an der Kontaktfläche und an einer Berührfläche 4, welche an der zum zweiten Kupplungsteil 2 zugewandten Seite des Kragens des ersten Kupplungsteils angeordnet ist. Die letztgenannte Fläche erstreckt sich wiederum nur in radialer Richtung und in Umfangsrichtung, insbesondere weist sie also nur eine einzige axiale Position auf.

Die Berührung erfolgt also an zwei zueinander senkrechten Ebenen. Die Schweißverbindung zwischen dem ersten Kupplungsteil 1 und dem Balg 3 ist an der Kontaktfläche 5 ausgeführt.

Somit wird der Balg 3 bei der Herstellung der Kupplung in einem ersten Herstellverfahrensschritt auf den Kragen des ersten Kupplungsteils 1 aufgesteckt, insbesondere in axialer Richtung bis zum Anschlag, also dem Anliegen des Balgs 3 an der Berührfläche 4.

In einem darauffolgenden zweiten Herstellverfahrensschritt wird die Schweißverbindung an der Kontaktfläche 5 ausgeführt. Dabei wird flüssig gewordenes verformtes Material bis zu einer am Kragen, insbesondere an der vom Balg 3 abgewandten Seite des Kragens, des ersten Kupplungsteils 1 angeordneten in Umfangsrichtung umlaufenden Rille 6 oder Ringnut verformt. Die Rille 6 oder Ringnut ist auf einem kleineren Radialabstand angeordnet als die Kontaktfläche 5.

In einem darauffolgenden dritten Herstellverfahrensschritt wird der Balg 3 axial gestaucht, wobei das zweite Kupplungsteil 2 an den Balg zum ersten Kupplungsteil 1 hingedrückt wird.

Die beim Stauchen eingeleitete Kraft wird vom Balg 3 an der Berührfläche 4 zum ersten Kupplungsteil 1 hin abgeleitet. Die Schweißverbindung zwischen dem ersten Kupplungsteil 1 und dem Balg 3 wird somit entlastet und nicht beansprucht.

Während dieses Herstellverfahrensschritts wird die zweite Kupplungsteil 2 koaxial zum ersten Kupplungsteil ausgerichtet, insbesondere auch in radialer Richtung verschoben.

In einem darauffolgenden vierten Herstellverfahrensschritt wird der Balg 3 mit dem zweiten Kupplungsteil 2 schweißverbunden. Somit ist das zweite Kupplungsteil 2 dann stoffschlüssig mit dem Balg 3 verbunden und koaxial zum ersten Kupplungsteil 1 ausgerichtet.

Auch nach der Herstellung bleibt dann das erste Kupplungsteil zum zweiten Kupplungsteil 2 koaxial ausgerichtet. Fertigungsungenauigkeiten bei der Erzeugung der Falten des Balgs 3 bewirken keine störende Verschiebung der beiden Kupplungsteile (1, 2) zueinander.

Hingegen wäre bei einer nicht erfindungsgemäßen Ausführung mit beidseitigen Kontaktflächen und Berührflächen zwar ein stabiles Überstülpen des Balgs 3 über die Kragen der Kupplungsteile (1, 2) ermöglicht, jedoch würden dann die Fertigungsungenauigkeiten nach dem Schweißverbinden die koaxiale Ausrichtung verhindern. Denn ein radiales Verschieben der Kupplungsteile (1, 2) wäre nicht möglich.

Ebenso wäre bei einem nicht erfindungsgemäßen Ausführungsbeispiel mit beidseitiger Berührfläche ohne Kontaktfläche zwar ein radiales Verschieben und somit koaxiales

Ausrichten ermöglicht, jedoch würden die beim Stauchen auftretenden Kräfte die Schweißverbindungen belasten und gefährden.

Erfindungsgemäß wird aber zuerst der Balg 3 am ersten Kupplungsteil 1 angeschweißt, dann der Balg 3 gestaucht und zuletzt das zweite Kupplungsteil 2 mit dem Balg 3 verschweißt.

Bei weiteren erfindungsgemäßen Ausführungsbeispielen ist die Motorseite und die Getriebeseite vertauscht, also die Kupplung umgekehrt ausgerichtet.

### Bezugszeichenliste

1 erstes Kupplungsteil
2 zweites Kupplungsteil
3 Balg
4 Berührfläche
5 Kontaktfläche
6 umlaufende Rille
20 Schweißnaht

## Patentansprüche

1. Kupplung, insbesondere für einen Getriebemotor,
wobei die Kupplung
- ein erstes Kupplungsteil (1) zur Verbindung mit einer ersten Welle, insbesondere Getriebewelle oder Motorwelle,
- ein zweites Kupplungsteil (2) zur Verbindung mit einer zweiten Welle, insbesondere Motorwelle oder Getriebewelle,
- und einen Balg (3)
aufweist,
wobei der Balg (3) mit dem ersten Kupplungsteil (1) nur an einer ersten Kontaktfläche (5) stoffschlüssig verbunden ist,
wobei der Balg (3) mit dem zweiten Kupplungsteil (2) nur an einer zweiten Kontaktfläche stoffschlüssig verbunden ist,
**wobei**
der Balg (3) das erste Kupplungsteil (1) zusätzlich zur ersten Kontaktfläche (5) an einer Berührfläche (4) berührt, welche eine axiale Position aufweist, insbesondere sich also nur in radialer Richtung und in Umfangsrichtung erstreckt,
wobei das erste Kupplungsteil (1), insbesondere der Kragen oder Absatz, einen axialen Anschlag und/ oder eine axiale Begrenzung für den Balg (3) bildet,
wobei der Balg (3) axial gestaucht ist
**dadurch gekennzeichnet, dass**
die erste Kontaktfläche (5) einen einzigen Radialabstand aufweist, insbesondere sich also nur in axialer und in Umfangsrichtung erstreckt,
und dass die zweite Kontaktfläche eine einzige axiale Position aufweist, insbesondere sich also nur in radialer Richtung und in Umfangsrichtung erstreckt.

2. Verfahren zum Herstellen einer Kupplung nach dem vorausgehenden Anspruch,
**wobei** in einem ersten Herstellverfahrensschritt der Balg (3) axial, insbesondere in axialer Richtung, auf das erste Kupplungsteil (1), insbesondere auf einen Absatz oder Kragen des ersten Kupplungsteils, in radialer Richtung spielfrei aufgesteckt und danach schweißverbunden wird,
danach in einem zweiten Herstellverfahrensschritt das zweite Kupplungsteil (2) axial, insbesondere in axialer Richtung, an den Balg (3) mit radialem Spiel angelegt, koaxial zum ersten Kupplungsteil (1) ausgerichtet und danach schweißverbunden wird
**dadurch gekennzeichnet, dass**
**während eines zwischen dem ersten und zweiten Herstellverfahrensschritt ausgeführten zwischengeordneten Herstellverfahrensschritts der Balg (3) axial gestaucht wird.**

3. Verfahren nach Anspruch 2,
**dadurch gekennzeichnet, dass**
die Schweißverbindung an einer ersten Kontaktfläche (5) zwischen Balg (3) und erstem Kupplungsteil (1) ausgeführt wird,
wobei die erste Kontaktfläche (5) sich nur axial und in Umfangsrichtung erstreckt, insbesondere nicht aber in radialer Richtung.

4. Verfahren nach einem der Ansprüche 2 bis 3,
**dadurch gekennzeichnet, dass**
die Schweißverbindung an einer zweiten Kontaktfläche zwischen Balg (3) und zweitem Kupplungsteil (2) ausgeführt wird,
wobei die zweite Kontaktfläche sich nur in radialer Richtung und in Umfangsrichtung erstreckt, insbesondere nicht aber in axialer Richtung.

5. Kupplung, nach Anspruch 1, **hergestellt nach einem Verfahren nach einem der Ansprüche 2 bis 4,**
**dadurch gekennzeichnet, dass**
der Balg (3) auf das erste Kupplungsteil (1), insbesondere auf einen Absatz oder Kragen des ersten Kupplungsteils, in radialer Richtung spielfrei axial, insbesondere in axialer Richtung, aufgesteckt und schweißverbunden ist,
wobei das zweite Kupplungsteil (2) an den Balg (3) mit radialem Spiel angelegt und schweißverbunden ist.

6. Kupplung, nach Anspruch 1, **hergestellt nach einem Verfahren nach einem der Ansprüche 2 bis** 4.

7. Kupplung nach Anspruch 5 oder 6,
**dadurch gekennzeichnet, dass**
der Balg (3) das erste Kupplungsteil (1) zusätzlich zur ersten Kontaktfläche (5) an einer Berührfläche (4) berührt, welche eine axiale Position aufweist, insbesondere sich also nur in radialer Richtung und in Umfangsrichtung erstreckt.

8. Kupplung nach einem der Ansprüche 5 bis 7,
**dadurch gekennzeichnet, dass**
das erste Kupplungsteil (1), insbesondere der Kragen oder Absatz, einen axialen Anschlag und/oder eine axiale Begrenzung für den Balg (3) bildet.

## Claims

1. A coupling, in particular for a geared motor,
wherein the coupling has
- a first coupling part (1) for connecting to a first shaft, in particular a gear shaft or motor shaft,
- a second coupling part (2) for connecting to a second shaft, in particular a motor shaft or gear shaft,
- and a bellows (3),
wherein the bellows (3) is connected to the first coupling part (1) by a material-formed bond only on a first contact face (5),
wherein the bellows (3) is connected to the second coupling part (2) by a material-formed bond only on a second contact face,
wherein
the bellows (3) touches the first coupling part (1), in addition to the first contact face (5), on a touching face (4) which has an axial position, in particular therefore extends only in the radial direction and in the peripheral direction,
wherein the first coupling part (1), in particular the collar or shoulder, forms an axial stop and/or an axial delimitation for the bellows (3),
wherein the bellows (3) is axially compressed,
**characterised in that**
the first contact face (5) has a single radial distance, in particular therefore extends only in the axial and in the peripheral direction,
and **in that** the second contact face has a single axial position, in particular therefore extends only in the radial direction and in the peripheral direction.

2. A method for producing a coupling according to the preceding claim,
wherein, in a first production method step, the bellows (3) is mounted axially, in particular in the axial direction, on the first coupling part (1), in particular on a shoulder or collar of the first coupling part, in the radial direction without play and thereafter is connected by welding,
thereafter, in a second production method step, the second coupling part (2) is laid axially, in particular in the axial direction, on the bellows (3) with radial play, is oriented coaxially with the first coupling part (1) and thereafter is connected by welding,
**characterised in that**
during an intermediate production method step carried out between the first and second production method steps the bellows (3) is axially compressed.

3. A method according to claim 2,
**characterised in that**
the connection by welding is carried out on a first contact face (5) between the bellows (3) and the first coupling part (1),
wherein the first contact face (5) extends only axially and in the peripheral direction, but in particular not in the radial direction.

4. A method according to one of claims 2 to 3,
**characterised in that**
the connection by welding is carried out on a second contact face between the bellows (3) and the second coupling part (2),
wherein the second contact face extends only in the radial direction and in the peripheral direction, but in particular not in the axial direction.

5. A coupling according to claim 1,
produced according to a method according to one of claims 2 to 4,
**characterised in that**
the bellows (3) is mounted on the first coupling part (1), in particular on a shoulder or collar of the first coupling part, in the radial direction without play axially, in particular in the axial direction, and is connected by welding,
wherein the second coupling part (2) is laid on the bellows (3) with radial play and is connected by welding.

6. A coupling according to claim 1, produced according to a method according to one of claims 2 to 4.

7. A coupling according to claim 5 or 6,
**characterised in that**
the bellows (3) touches the first coupling part (1), in addition to the first contact face (5), on a touching face (4) which has an axial position, in particular therefore extends only in the radial direction and in the peripheral direction.

8. A coupling according to one of claims 5 to 7,
**characterised in that**
the first coupling part (1), in particular the collar or shoulder, forms an axial stop and/or an axial delimitation for the bellows (3).

## Revendications

1. Accouplement notamment destiné à un motoréducteur, ledit accouplement comprenant
- une première partie d'accouplement (1) dévolue à la liaison avec un premier arbre, en particulier un arbre de transmission ou un arbre moteur,
- une seconde partie d'accouplement (2) affectée à la liaison avec un second arbre, en particulier un arbre moteur ou un arbre de transmission,
- et un soufflet (3),
lequel soufflet (3) est relié à la première partie d'accouplement (1) par complémentarité de formes, uniquement au niveau d'une première surface de contact (5),
ledit soufflet (3) étant relié à la seconde partie d'accouplement (2) par complémentarité de formes, uniquement au niveau d'une seconde surface de contact,
sachant que ledit soufflet (3) porte contre la première partie d'accouplement (1), en plus de la première surface de contact (5), au niveau d'une surface d'adossement (4) qui occupe un emplacement axial et s'étend de ce fait, en particulier, uniquement dans une direction radiale et dans une direction périphérique,
ladite première partie d'accouplement (1), notamment la collerette ou le gradin, formant alors une butée axiale et/ou une délimitation axiale dédiée audit soufflet (3),
lequel soufflet (3) est comprimé axialement,
**caractérisé par le fait que**
la première surface de contact (5) présente un unique espacement radial, c'est-à-dire qu'elle s'étend, en particulier, uniquement dans les directions axiale et périphérique ;
et **par le fait que** la seconde surface de contact occupe un unique emplacement axial, c'est-à-dire qu'elle s'étend, en particulier, uniquement dans la direction radiale et dans la direction périphérique.

2. Procédé de fabrication d'un accouplement conforme à la revendication précédente,
sachant que, au cours d'une première étape dudit procédé de fabrication, le soufflet (3) est emboîté axialement, en particulier dans une direction axiale sur la première partie d'accouplement (1), notamment sur un gradin ou une collerette de ladite première partie d'accouplement, avec absence de jeu dans la direction radiale, après quoi il est relié par soudage,
ensuite, au cours d'une deuxième étape dudit procédé de fabrication, la seconde partie d'accouplement (2) est mise en applique contre ledit soufflet (3) axialement, en particulier dans une direction axiale, avec jeu radial et orientation coaxiale à ladite première partie d'accouplement (1), après quoi elle est reliée par soudage,
**caractérisé par le fait que**
le soufflet (3) est comprimé axialement au cours d'une étape intermédiaire du procédé de fabrication, exécutée entre les première et deuxième étapes dudit procédé de fabrication.

3. Procédé selon la revendication 2,
**caractérisé par le fait que**
la liaison par soudage est effectuée au niveau d'une première surface de contact (5), entre le soufflet (3) et la première partie d'accouplement (1),
laquelle première surface de contact (5) s'étend uniquement dans le sens axial et dans une direction périphérique, mais notamment pas dans une direction radiale.

4. Procédé selon l'une des revendications 2 à 3,
**caractérisé par le fait que**
la liaison par soudage est effectuée au niveau d'une seconde surface de contact, entre le soufflet (3) et la seconde partie d'accouplement (2),
laquelle seconde surface de contact s'étend uniquement dans une direction radiale et dans une direction périphérique, mais notamment pas dans une direction axiale.

5. Accouplement selon la revendication 1, fabriqué en conformité avec un procédé selon l'une des revendications 2 à 4,
**caractérisé par le fait que**
le soufflet (3) est emboîté sur la première partie d'accouplement (1) et est relié axialement par soudage, en particulier dans une direction axiale, notamment sur un gradin ou une collerette de ladite première partie d'accouplement, avec absence de jeu dans la direction radiale,
la seconde partie d'accouplement (2) étant mise en applique contre ledit soufflet (3) et étant reliée par soudage, avec jeu radial.

6. Accouplement selon la revendication 1, fabriqué en conformité avec un procédé selon l'une des revendications 2 à 4.

7. Accouplement selon la revendication 5 ou 6,
**caractérisé par le fait que**
le soufflet (3) porte contre la première partie d'accouplement (1), en plus de la première surface de contact (5), au niveau d'une surface d'adossement (4) qui occupe un emplacement axial et s'étend de ce fait, en particulier, uniquement dans une direction radiale et dans une direction périphérique.

8. Accouplement selon l'une des revendications 5 à 7,
**caractérisé par le fait que**
la première partie d'accouplement (1), notamment la collerette ou le gradin, forme une butée axiale et/ou une délimitation axiale dédiée au soufflet (3).
